# EUROPÄISCHE PATENTANMELDUNG

(11) **EP 2 806 136 A1**
(43) Veröffentlichungstag der Anmeldung: **26.11.2014**
(21) Anmeldenummer: 14155309.9
(22) Anmeldetag: 17.02.2014
(51) Int. Cl.: F02B 27/02, F02B 31/08, F02D 9/02, F16K 1/22, F02M 35/108, F02D 9/10

(54) **Schaltsaugrohr**

(30) Priorität: 22.05.2013 DE 102013008686
(71) Anmelder: Volkswagen Aktiengesellschaft, 38440 Wolfsburg (DE)
(72) Erfinder: Schleyer, Jörg, 38440 Wolfsburg (DE)

(57) **Zusammenfassung**

Ein Schaltsaugrohr (14) mit einem mindestens einen Strömungskanal ausbildenden Gehäuse (16) und mindestens einem eine Gasströmung in dem Strömungskanal beeinflussenden und/oder den Strömungskanal verändernden Regelelement sowie einer Betätigungsvorrichtung zum Betätigen des Regelelements ist dadurch gekennzeichnet, dass die Betätigungsvorrichtung einen elektro-pneumatischen Druckwandler (42) umfasst.

## Beschreibung

Die Erfindung betrifft ein Schaltsaugrohr sowie ein ein solches Schaltsaugrohr aufweisendes Kraftfahrzeug.

Die Verwendung von Schaltsaugrohren in Kraftfahrzeugen als Teil der das Kraftfahrzeug antreibenden Brennkraftmaschine ist bekannt.

Als Saugrohr wird der sich im direkten Anschluss an den Zylinderkopf eines Verbrennungsmotors vorgesehene Abschnitt des Frischgasstrangs bezeichnet. In dem Saugrohr erfolgt eine Aufteilung der Frischgasströmung auf die einzelnen Zylinder des Verbrennungsmotors, so dass Saugrohre regelmäßig eine Eintrittsöffnung und mehrere Austrittsöffnungen für die Frischgasströmung aufweisen, wobei die Austrittsöffnungen in Überdeckung mit den Einlasskanälen im Zylinderkopf des Verbrennungsmotors sind.

Als Schaltsaugrohr werden solche Saugrohre bezeichnet, die eine Beeinflussung der Frischgasströmung zur Anpassung an unterschiedliche Betriebspunkte des Verbrennungsmotors ermöglichen.

Die Verwendung von Schaltsaugrohren ist beispielsweise zur Erzielung einer sogenannten Schwingsaugrohr- oder Resonanzaufladung bekannt, bei der durch eine Veränderung der zylinderindividuellen Saugrohrlänge ein Öffnen des oder der Einlassventile zu Zeiten erfolgt, wenn das als Druckwelle ankommende Frischgas einen relativ hohen Druck aufweist. Dadurch kann die Füllung insbesondere von nicht aufgeladenen Verbrennungsmotoren verbessert werden. Hierzu können beispielsweise in dem Schaltsaugrohr zwei Zuführkanäle für jeden Zylinder ausgebildet sein, die durch unterschiedliche Kanallängen gekennzeichnet sind, wobei in Abhängigkeit von dem Betriebspunkt des Verbrennungsmotors nur der eine oder der andere oder aber beide Zuführkanäle freigegeben werden. Dies kann durch eine oder zwei verstellbare Klappen je Zylinder erfolgen.

Ein Schaltsaugrohr mit längenveränderlichen Zuführkanälen ist beispielsweise aus der DE 198 26 473 A1 bekannt. Dort wird die Veränderung der Längen der Zuführkanäle über ein axial verschiebbares Trennklappensystem realisiert, wobei die die Trennklappen tragende Schiebestange selbst als pneumatischer Kolben wirkt, dessen Stellung durch die Höhe eines angelegten Unterdrucks in Wechselwirkung mit der Vorspannung einer Schraubenfeder eingestellt wird.

Weiterhin ist die Verwendung von Schaltsaugrohren auch zur Erzeugung einer Schichtladung in den Brennräumen bekannt. Hierzu werden Schaltsaugrohre mit sogenannten Drallklappen eingesetzt, wobei durch die Drallklappen die Richtungen und/oder die Geschwindigkeiten der Frischgasströmungen so beeinflusst werden, dass diese mit definierten Drall- und/oder Tumblebewegungen in die Brennräume der Zylinder eintreten.

Derzeit werden die Regelelemente zur Beeinflussung der Frischgasströmung in Schaltsaugrohren entweder elektrisch oder elektropneumatisch betätigt.

Bekannte elektropneumatische Betätigungen sehen einen pneumatischen Steller zur Betätigung des Regelelements sowie ein elektrisches Umschaltventil zur Betätigung des pneumatischen Stellers vor. Nachteilig an dieser Ausgestaltung ist, dass dann durch den pneumatischen Steller lediglich zwei Stellungen (z.B. geöffnet und geschlossen) für das Regelelement realisiert werden können.

Dieser Nachteil wird durch die Verwendung von elektrischen Stellern vermieden, die in der Regel eine mehrstufige bis hin zu stufenloser Betätigung des Regelelements ermöglichen. Diese sind jedoch im Vergleich zu einer elektropneumatischen Betätigung mit höheren Kosten verbunden.

Ausgehend von diesem Stand der Technik lag der Erfindung die Aufgabe zugrunde, eine kostengünstige mehrstufige oder stufenlose Betätigung eines Regelelements eines Schaltsaugrohrs anzugeben.

Diese Aufgabe wird mittels eines Schaltsaugrohrs gemäß dem unabhängigen Patentanspruch 1 gelöst. Ein ein solches Schaltsaugrohr aufweisendes Kraftfahrzeug ist Gegenstand des Patenanspruchs 5. Vorteilhafte Ausführungsformen des erfindungsgemäßen Schaltsaugrohrs sowie des erfindungsgemäßen Kraftfahrzeugs sind Gegenstand der jeweiligen abhängigen Patentansprüche und ergeben sich aus der nachfolgenden Beschreibung der Erfindung.

Ein gattungsgemäßes Schaltsaugrohr mit einem mindestens einen Strömungskanal ausbildenden Gehäuse und mindestens einem eine Gasströmung in dem Strömungskanal beeinflussenden und/oder den Strömungskanal verändernden Regelelement sowie einer Betätigungsvorrichtung zum Betätigen des Regelelements ist erfindungsgemäß dadurch weitergebildet, dass die Betätigungsvorrichtung einen elektro-pneumatischen Druckwandler umfasst.

Bei einem elektro-pneumatischen Druckwandler handelt es sich um eine Vorrichtung, die in Abhängigkeit von einem elektrischen Steuersignal durch Mischung von zwei verschiedenen pneumatischen Drücken einen Steuerdruck erzeugt. Eine Ausführungsform eines elektro-pneumatischen Druckwandlers ist beispielsweise in der EP 0 813 011 A1 beschrieben.

Der Steuerdruck, der von dem Druckwandler erzeugt wird, kann direkt oder indirekt zur Betätigung des Regelelements des Schaltsaugrohrs verwendet werden. Da mittels eines Druckwandler ohne weiteres der Steuerdruck in einer Vielzahl von Stufen oder sogar weitgehend stufenlos einstellbar ist, kann erfindungsgemäß, eine entsprechend abgestufte oder stufenlose Betätigung des Regelelements des Schaltsaugrohrs erreicht werden. Wegen der vergleichsweise geringen Kosten von Druckwandlern ist die abgestufte oder stufenlose Betätigung des Regelelements zudem mit im Vergleich zu der Verwendung eines elektrischen Stellers geringen Kosten verbunden.

Vorzugsweise kann vorgesehen sein, dass das Regelelement stufenlos betätigbar ist, was eine besonders genaue Anpassung der Frischgasströmung in dem Schaltsaugrohr an den Betriebspunkt eines an das Schaltsaugrohr angeschlossenen Verbrennungsmotors ermöglicht.

In einer bevorzugten Ausgestaltung des erfindungsgemäßen Schaltsaugrohrs kann eine indirekte Betätigung des Regelelements durch den Druckwandler vorgesehen sein. Dabei ist besonders bevorzugt vorgesehen, dass der elektro-pneumatische Druckwandler mit seinem Steuerdruck ein pneumatisches Stellglied, insbesondere eine sogenannte Unterdruckdose, betätigt, das (die) wiederum (mechanisch) das Regelelement betätigt. Dies stellt eine konstruktiv einfache und kostengünstige Möglichkeit dar, den pneumatischen Steuerdruck mechanisch auf das Regelelement zu übertragen.

Weiterhin bevorzugt kann das pneumatische Stellglied einen Lagesensor umfassen, aus dem die Stellung des Regelelements ableitbar ist. Dies kann eine genauere Regelung der Betätigung des Regelelements ermöglichen. Alternativ kann der Lagesensor aber auch die Lage des Regelelements selbst oder eines damit direkt verbundenen mechanischen Elements, z.B. einer Welle bestimmen.

Ein erfindungsgemäßes Kraftfahrzeug umfasst eine ein erfindungsgemäßes Schaltsaugrohr aufweisende Brennkraftmaschine und ist weiterhin dadurch definiert, dass der elektropneumatische Druckwandler fahrzeugseitig befestigt ist.

Dabei wird unter einer "fahrzeugseitigen" Befestigung verstanden, dass der Druckwandler an einem Teil der Fahrzeugstruktur befestigt ist, die über Motorlager (vorzugsweise mit integrierten Schwingungsdämpfern) von dem Verbrennungsmotor der Brennkraftmaschine strukturell getrennt ist.

Durch den fahrzeugseitigen Verbau des Druckwandlers kann dessen Schwingungsbelastung im Vergleich zu einer motorseitigen Befestigung reduziert werden.

Besonders bevorzugt kann vorgesehen sein, dass der elektro-pneumatische Druckwandler an einer den Motorraum von dem Fahrgastraum trennenden Stirnwand des Kraftfahrzeugs verbaut ist.

Die Erfindung wird nachfolgend anhand eines in den Zeichnungen dargestellten Ausführungsbeispiels näher erläutert. Die Zeichnungen zeigen in
- Fig. 1:: einen Teil eines erfindungsgemäßen Kraftfahrzeugs in einer perspektivischen Darstellung;

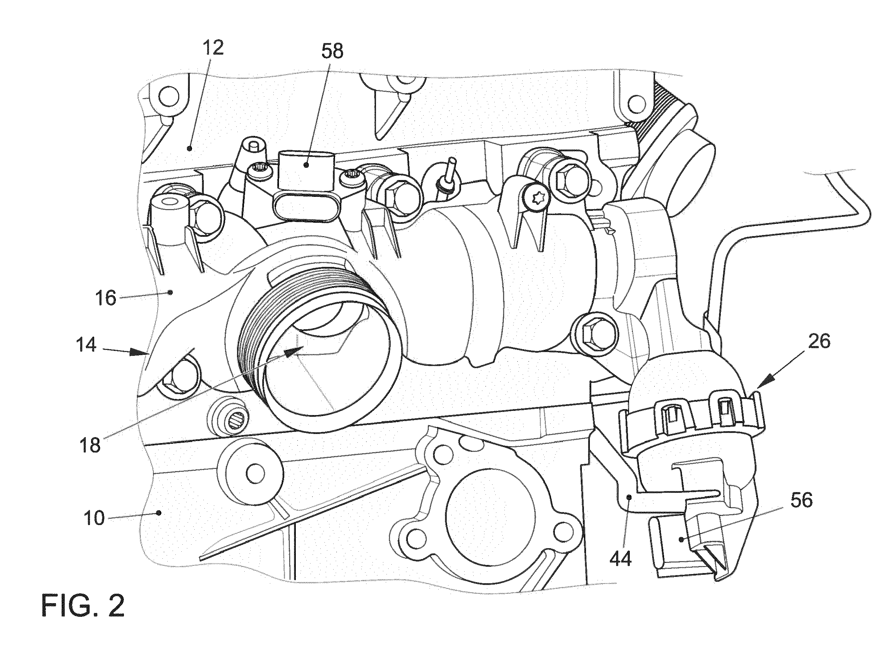

- Fig. 2:: einen vergrößerten Ausschnitt aus der Fig. 1;
- Fig. 3:: einen Teil des Schaltsaugrohrs des Kraftfahrzeugs in einer perspektivischen Darstellung; und
- Fig. 4:: eine Längsschnitt durch die Unterdruckdose des Schaltsaugrohrs.

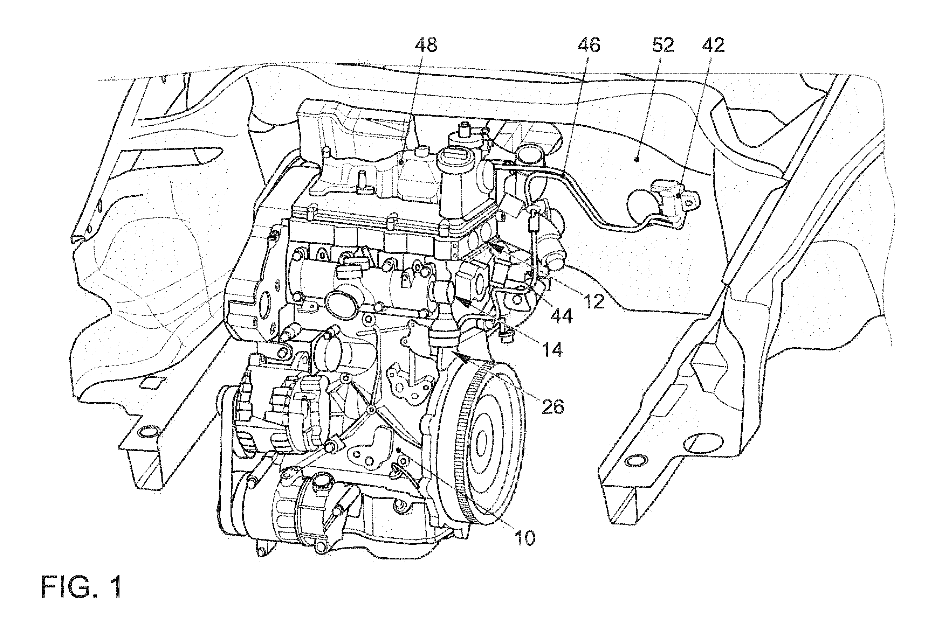

Die Fig. 1 zeigt einen Teil eines erfindungsgemäßen Kraftfahrzeugs. Dargestellt ist ein Teil einer Brennkraftmaschine, die in einem Motorraum einer Karosserie des Kraftfahrzeugs angeordnet ist. Von der Karosserie sind lediglich einzelne Strukturbauteile dargestellt.

Die Brennkraftmaschine umfasst einen Verbrennungsmotor, im vorliegenden Ausführungsbeispiel einen dreizylindrigen Dieselmotor mit Abgasturbolader. Der Verbrennungsmotor umfasst ein Zylinderkurbelgehäuse 10, in dem mehrere (hier: drei) Zylinder ausgebildet sind, in denen jeweils ein Kolben beweglich geführt ist. Ein Zylinderkopf 12 schließt das Zylinderkurbelgehäuse 10 nach oben ab. Der Zylinderkopf 12 bildet Einlass- und Auslasskanäle für jeden der Zylinder aus. Über die Einlasskanäle wird den von den Zylindern und den Kolben ausgebildeten Brennräumen Frischgas (hier: verdichtete Luft) zugeführt und über die Auslasskanäle das bei der Verbrennung der Luft mit direkt eingespritztem Kraftstoff entstehende Abgas wieder abgeführt.

Das Zuführen des Frischgases erfolgt über einen Frischgasstrang, der in seinem letzten, d.h. direkt an den Zylinderkopf angrenzenden Abschnitt als Schaltsaugrohr 14 ausgebildet ist. Das Schaltsaugrohr 14 umfasst ein rohrförmiges Gehäuse 16 (z.B. bestehend aus zwei KunststoffHalbschalen), die eine Eintrittsöffnung 18 für den Eintritt des Frischgases in das Schaltsaugrohr 14 sowie mehrere Austrittsöffnungen 20 für ein Überströmen von Frischgasströmungen in die Einlasskanäle des Verbrennungsmotors ausbilden.

Der Verbrennungsmotor weist je Zylinder zwei Einlasskanäle 20 auf, von denen einer als Füllungskanal und der andere als Drallkanal vorgesehen bzw. ausgebildet ist. Während die Füllungskanäle primär einer verlustarmen Füllung der Brennräume dienen, soll durch die Drallkanäle ein Drall der in die Brennräume einströmenden Frischgasströmungen erzielt werden.

Da mittels des Schaltsaugrohrs 14 eine Aufteilung der Frischgasströmung auf die einzelnen Einlasskanäle des Verbrennungsmotors erfolgt, weist das Schaltsaugrohr auch zwei Austrittsöffnungen je Zylinder auf. Im vorliegenden Ausführungsbeispiel sind die Querschnitte der mit den Drallkanälen überdeckenden Austrittsöffnungen 20 rund während die Querschnitte der mit den Füllungskanälen überdeckenden Austrittsöffnungen 20 in etwa quadratisch ausgebildet sind.

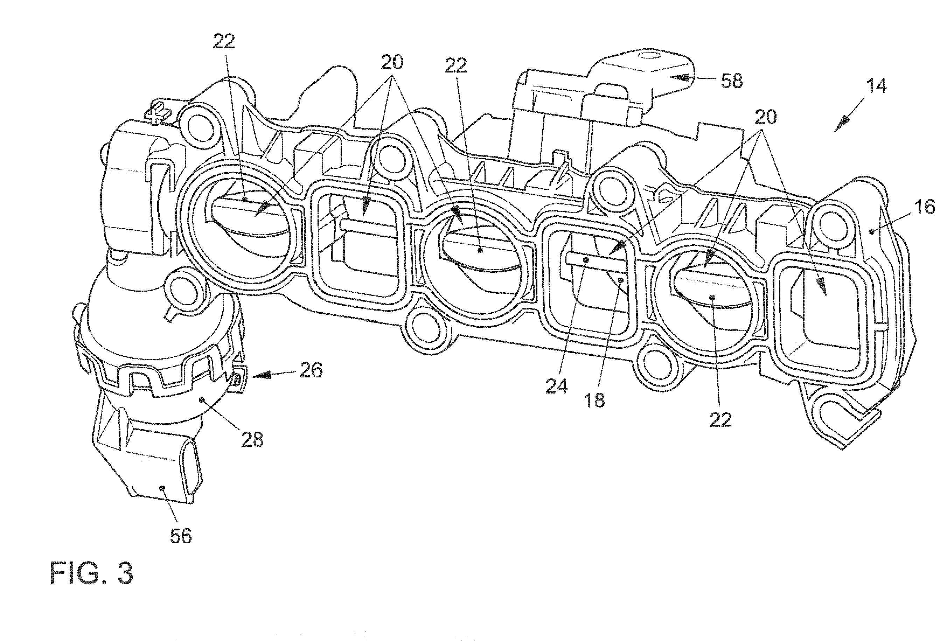

In Abhängigkeit von dem (last- und drehzahlabhängigen) Betriebspunkt, in dem der Verbrennungsmotor betrieben wird, ist eine Veränderung des von den Drallkanälen erzeugten Dralls erwünscht. Hierzu dienen Regelelemente in Form von Drallklappen 22, die innerhalb des Schaltsaugrohrs 14 im Bereich der mit den Drallkanälen überdeckenden Austrittsöffnungen 20 angeordnet sind. Die Drallklappen 22 sind auf einer gemeinsamen Welle 24 befestigt, die drehbar in dem Schaltsaugrohr 14 gelagert ist. Durch eine Drehung der Welle 24 können die Drallklappen 22 von der in der Fig. 3 dargestellten Stellung, in der diese senkrecht zu den Querschnitten der Austrittsöffnungen 20 angeordnet sind, um bis zu 90° verdreht werden. In der dann erreichten Endstellung verschließen die Drallklappen 22 die Drallkanäle weitgehend vollständig, so dass den Brennräumen der Zylinder Frischgas nur noch über die Füllungskanäle zugeführt wird.

Zwischen den beiden Endstellungen können die Drallklappen in mehrere definierte Zwischenstellungen oder stufenlos, d.h. in beliebige Zwischenstellungen verstellt werden. Dies ermöglicht nicht nur ein Öffnung und Schließen der Drallkanäle des Verbrennungsmotors sondern auch eine relativ exakte Anpassung der Menge des über die Drallkanäle den Brennräumen zugeführten Frischgases. Zudem kann durch die Stellung der Drallklappen 22 auch die Strömung beim Eintritt in die Drallkanäle und damit die konkrete Ausbildung eines Dralls in den Brennräumen beeinflusst werden.

Die Drallklappen 22 werden von einem pneumatischen Stellglied betätigt, das in Form einer Unterdruckdose 26 ausgebildet ist.

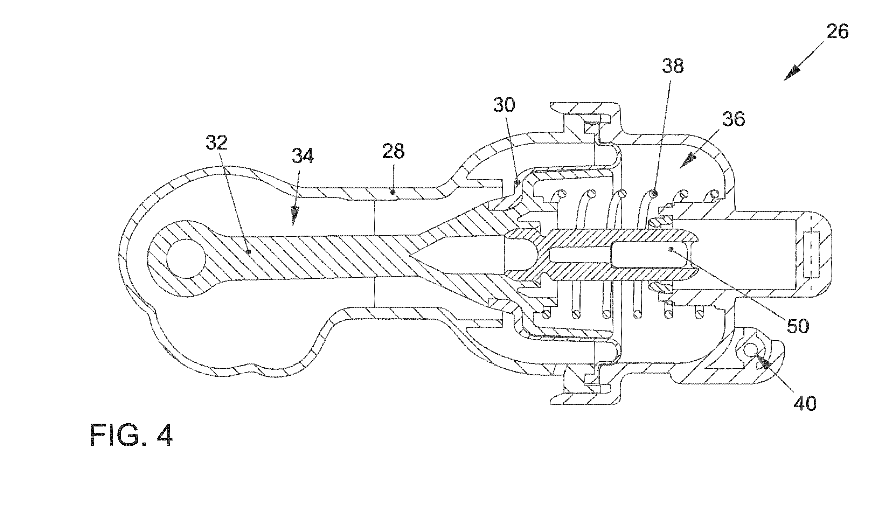

Die Unterdruckdose 26 umfasst ein zweiteiliges Gehäuse 28, dessen Innenvolumen von einer Membran 30 sowie dem unteren Teil einer Schubstange 32 in zwei Kammern unterteilt ist. Die ringförmige Membran ist dabei außenseitig zwischen den zwei Teilen des Gehäuses 28 geklemmt fixiert und liegt innenseitig dichtend an einem Abschnitt der Außenseite der Schubstange 32 an. In einer ersten, in der Fig. 4 oben dargestellten (Atmosphärendruck-)Kammer 34 des Innenvolumens ist die Schubstange 32 mit einem Exzenter der die Drallklappen 22 tragenden Welle 24 verbunden. Dadurch wird eine translatorische Bewegung der Schubstange 32 in eine Rotation der Welle 24 übersetzt.

Eine translatorische Bewegung der Schubstange 32 erfolgt in Abhängigkeit von dem Druck in der zweiten, unteren (Unterdruck-)Kammer 36 des Innenvolumens des Gehäuses 28 in Wechselwirkung mit dem atmosphärischen Druck in der Atmosphärendruckkammer 34 sowie der Druckvorspannung einer Schraubenfeder 38. Die Schraubenfeder 28 stützt sich zwischen dem Gehäuse 28 und der Schubstange 32 ab und belastet diese in Richtung der Atmosphärendruckkammer 34, was einer Öffnung der Drallklappen (vgl. Stellung der Drallklappen gemäß der Fig. 3) entspricht. Über einen Unterdruckanschluss 40 kann die Unterdruckkammer 36 teilweise evakuiert werden, während in der Atmosphärendruckkammer 34 dauerhaft weitgehend atmosphärischer Druck herrscht. Die so erzeugte Druckdifferenz führt zu einer Bewegung der Schubstange 32 entgegen einer zunehmenden Vorspannung der Schraubenfeder 38 in Richtung der Unterdruckkammer 36, was mit einer zunehmenden Schrägstellung der Drallklappen 22 verbunden ist. Diese Bewegung der Schubstange 32 erfolgt bei gleichbleibendem Steuerdruck, bis sich ein Kräftegleichgewicht eingestellt hat.

Die teilweise Evakuierung der Unterdruckkammer 36 wird erfindungsgemäß mittels eines elektro-pneumatischen Druckwandlers 42 bewirkt, der an einer Stirnwand 52 der Karosserie des Kraftfahrzeugs befestigt und über eine Steuerdruckleitung 44 mit dem Unterdruckanschluss 40 der Unterdruckdose 26 verbunden ist.

In dem elektro-pneumatischen Druckwandler 42 wird in bekannter Weise in Abhängigkeit von einem elektrischen Steuersignal, das dem elektro-pneumatischen Druckwandler 42 von einer Motorsteuerung des Kraftfahrzeugs zugeführt wird, ein Steuerdruck durch eine "Mischung" eines Unterdrucks mit Atmosphärendruck erzeugt. Dieser Steuerdruck, dessen Höhe zu dem Steuersignal proportional sein kann, liegt somit stets unterhalb des Atmosphärendrucks.

Der zur Erzeugung des Steuerdruck herangezogene Unterdruck wird über eine Unterdruckleitung 46 in dem Innenvolumen einer Zylinderkopfhaube 48 abgegriffen. Der Unterdruck dort wird beispielsweise mittels einer Unterdruckpumpe erzeugt.

Für eine möglichst exakte Regelung der Betätigung der Drallklappen 22 ist ein Lagesensor vorgesehen, der die exakte Stellung der Schubstange 32 der Unterdruckdose 26 ermittelt. Der Lagesensor umfasst einen mit der Schubstange 32 verbundenen (Permanent-)Magneten 50 sowie einen Magnetsensor 54, der ein Messsignal erzeugt, das von der Entfernung zu dem Magneten 50 abhängig ist. Das Messsignal wird elektrisch an die Motorsteuerung übertragen, wozu in das Gehäuse 2 8 der Unterdruckdose 26 ein Steckverbinder 56 zum Anschluss eines Kabels integriert ist.

Von der Motorsteuerung kann das Messsignal des Lagesensors in einem Soll-/Ist-Wert-Vergleich zur exakten Ansteuerung des elektro-pneumatischen Druckwandlers 42 herangezogen werden.

Zur dessen Ansteuerung wird zudem das Messsignal eines Drucksensors 58 herangezogen, der den Druck innerhalb des Gehäuses 16 des Schaltsaugrohrs 14 misst.

### Bezugszeichenliste

- 10: Zylinderkurbelgehäuse
- 12: Zylinderkopf
- 14: Schaltsaugrohr
- 16: Gehäuse
- 18: Eintrittsöffnung
- 20: Austrittsöffnung
- 22: Drallklappe
- 24: Welle
- 26: Unterdruckdose
- 28: Gehäuse
- 30: Membran
- 32: Schubstange
- 34: Atmosphärendruckkammer
- 36: Unterdruckkammer
- 38: Schraubenfeder
- 40: Unterdruckanschluss
- 42: elektro-pneumatischer Druckwandler
- 44: Steuerdruckleitung
- 46: Unterdruckleitung
- 48: Zylinderkopfhaube
- 50: Magnet
- 52: Stirnwand
- 54: Magnetsensor
- 56: Steckverbinder

## Patentansprüche

1. Schaltsaugrohr (14) mit einem mindestens einen Strömungskanal ausbildenden Gehäuse (16) und mindestens einem eine Gasströmung in dem Strömungskanal beeinflussenden und/oder den Strömungskanal verändernden Regelelement sowie einer Betätigungsvorrichtung zum Betätigen des Regelelements, **dadurch gekennzeichnet, dass** die Betätigungsvorrichtung einen elektro-pneumatischen Druckwandler (42) umfasst.

2. Schaltsaugrohr (14) gemäß Anspruch 1, **dadurch gekennzeichnet, dass** das Regelelement stufenlos betätigbar ist.

3. Schaltsaugrohr (14) gemäß Anspruch 1 oder 2, **dadurch gekennzeichnet, dass** der elektro-pneumatische Druckwandler (42) mit einem Steuerdruck ein pneumatisches Stellglied betätigt, das wiederum das Regelelement betätigt.

4. Schaltsaugrohr (14) gemäß Anspruch 3, **dadurch gekennzeichnet, dass** das Stellglied einen Lagesensor umfasst.

5. Kraftfahrzeug mit einer ein Schaltsaugrohr (14) gemäß einem der Ansprüche 3 oder 4 aufweisenden Brennkraftmaschine, **dadurch gekennzeichnet, dass** der elektropneumatische Druckwandler (42) fahrzeugseitig befestigt ist.

6. Kraftfahrzeug gemäß Anspruch 5, **dadurch gekennzeichnet, dass** der elektro-pneumatischen Druckwandler (42) an einer Stirnwand (52) des Kraftfahrzeugs befestigt ist.
